# EUROPEAN PATENT SPECIFICATION

(11) **EP 1 650 475 B1**
(45) Date of publication and mention of the grant of the patent: **05.09.2007**
(21) Application number: 05022030.0
(22) Date of filing: 10.10.2005
(51) Int. Cl.: F16H 9/18, B62M 9/06, B62M 7/12

(54) **V-belt type automatic transmission**
Automatisches Getriebe vom Keilriementyp
Transmission automatique du type à courroie en V

(30) Priority: 22.10.2004 JP 2004307807
(43) Date of publication of application: 26.04.2006
(60) Divisional application: 07110237.0
(73) Proprietor: HONDA MOTOR CO., Ltd., Tokyo (JP)
(72) Inventor: Ishikawa, Hideo, Wako-shi Saitama (JP); Kaneko, Mitsunobu, Wako-shi Saitama (JP)
(74) Representative: Rupp, Christian

(56) References cited:
- EP-A- 0 510 570
- EP-A- 1 223 366
- EP-A- 1 443 246
- US-A- 3 948 112
- PATENT ABSTRACTS OF JAPAN vol. 009, no. 025 (M-355), 2 February 1985 (1985-02-02) & JP 59 170552 A (HONDA GIKEN KOGYO KK), 26 September 1984 (1984-09-26)
- PATENT ABSTRACTS OF JAPAN vol. 016, no. 553 (M-1339), 24 November 1992 (1992-11-24) & JP 04 210156 A (YAMAHA MOTOR CO LTD), 31 July 1992 (1992-07-31)

## Description

The present invention relates to a V-belt type automatic transmission, and particularly to assembly of a movable half body of a driving pulley to a crankshaft.

While an internal combustion engine is operated, a large force caused by an abrupt pressure rise due to combustion is imposed on a piston located near a dead top center, causing a slight deflection of a crankshaft with a borne portion of the crankshaft being a supporting point. This results in whirling of the crankshaft at an end portion thereof. In the conventional V-belt type automatic transmission, a plurality of rotation stoppers for inhibiting rotation of the movable half body of the driving pulley relative to the crankshaft are provided along an entire circumference of the movable half body. (See Patent Document 1, for instance.) According to this arrangement, the whirling crankshaft makes a noise at some rotation stoppers.

[Patent Document 1] Publication of Utility Model Registration No. 2600500 (Fig. 3)
Patent document EP 1 223 366 A2 relates to a V-belt type automatic transmission, wherein cooling air passages are formed within a movable sheave of a drive pulley of the V-belt transmission. The drive pulley comprises a stationery half body secured to a crankshaft and said movable half body opposed to the stationery half body and disposed to be slidable on a crankshaft in a direction of an axis of the crankshaft. The movable sheave is made up of a disk forming a V-groove in cooperation with the disk of the fixed sheave, a weight holder, and a movable sleeve for combining together the disk and the weight holder. The movable sleeve is fitted over a sleeve fixed on the crankshaft for supporting the movable sheave. Thus, the rotary movement of the sleeve is prevented as a plurality of guide pins planted in the fixed sleeve fit into elongated holes and the axial movement of the movable sleeve is permitted.
Patent document JP 04 210156 A relates to a V-belt automatic transmission according to the preamble of claim 1 including a primary sheave comprising a stationery sheave fixed on a crankshaft and a movable sheave opposed to the stationery sheave and disposed to be slidable on a crankshaft in a direction of an axis of the crankshaft. A guide pin for transmitting the drive torque of the crankshaft to the movable sheave is fitted to engage a guide groove of the movable sheave and a sleeve fixed on the crankshaft. The guide pin and the crankpin are disposed on the same side of the axis of the crankshaft.
Patent document JP 59 170552 A relates to a V-belt transmission type automatic transmission including a driving pulley comprising a stationery half body fixed on a crankshaft and a movable half body opposed to the stationery half body and disposed to be slidable on the crankshaft in a direction of an axis of the crankshaft. Because of the fitting of a pin, which is protrudally provided on a boss fitted onto a crankshaft, in a guide groove arranged on the movable half body, an axial force acts on the movable half body.

An object of this invention is to reduce the noise generated at the rotation stoppers of the movable half body of the driving pulley when the crankshaft makes the whirling motion.

To solve the above problem, a first arrangement of the invention as defined in claim 1 relates to a V-belt type automatic transmission including a crankshaft, a cylindrical sleeve, which is fixed on the crankshaft, a crankpin and a driving pulley, said driving pulley comprising a stationary half body fixed on the crankshaft and a movable half body opposed to the stationary half body and disposed to be slidable on the crankshaft in a direction of an axis of the crankshaft, wherein the movable half body comprises a skirt-shaped flange portion for holding a V-belt, and a cylindrical boss portion having a guide groove to which is transmitted a driving torque from the crankshaft, and a single key for transmitting the driving torque of the crankshaft to the movable half body is fitted between the guide groove and a keyway formed in the cylindrical sleeve, the belt type automatic transmission being characterized in that the torque transmitting key is disposed in a circumferential direction of the crankshaft on a side of the axis of the crankshaft which is opposite to the side of the crankpin.

A second arrangement of the invention as defined in claim 2 provides the V-belt type automatic transmission according to the arrangement of claim 1 characterized in that the torque transmitting key is disposed within an angular range from 90° to 225° around the axis of the crankshaft where a direction toward a crankpin being 0°.

A third arrangement of the invention as defined in claim 3 provides the V-belt type automatic transmission according to the arrangement of claim 1 or 2, characterized in that a surface of the torque transmitting key remote from the axis of the crankshaft comprises a curved surface having a generatrix parallel to the axis of the crankshaft.

A fourth arrangement of the invention as defined in claim 4 provides the V-belt type automatic transmission according to the arrangement of any of claim 1 to 3,
characterized in that the movable half body of the driving pulley is driven by an actuator via a slider mechanism, along the axis of the crankshaft.

The arrangement of claim 1 reduces the noise generated between the key and the member covering an outer circumference of the cylindrical boss portion, due to the deflection of the crankshaft due to the above-mentioned force and the whirling motion of the crankshaft.

Additionally, according to the arrangement of claim 1, only a single key is provided in the circumferential direction of the crankshaft, as a guide member for the slider mechanism. This arrangement enables to omit a clearance in the circumferential direction which has been required heretofore for accommodating a relative error due to provision of a plurality of keys, thereby reducing rattling between relevant members in the circumferential direction. Thus, in addition to the reduction in the noise due to the radial contact between relevant members, the noise is further reduced.

According to the arrangement of claim 2, the torque transmitting key is located within a directional range within which the crankshaft may be displaced in the whirling motion thereof, with the directional range corresponding to a normal range of spark-advance with respect to ignition timing, thereby reducing the noise generated between the key and the member covering an outer circumference of the cylindrical boss portion, because of the deflection of the crankshaft due to the above-mentioned force and the whirling motion of the crankshaft.

According to the arrangement of claim 3, the torque transmitting key and the member covering the outer circumference of the boss portion contact each other at a single generatrix. Thus, the noise is further reduced.

According to the arrangement of claim 4, the noise is reduced while a crankshaft portion is maintained relatively small, enabling the slider mechanism to be disposed around the crankshaft. Thus, the size of the V-belt type automatic transmission can be reduced.

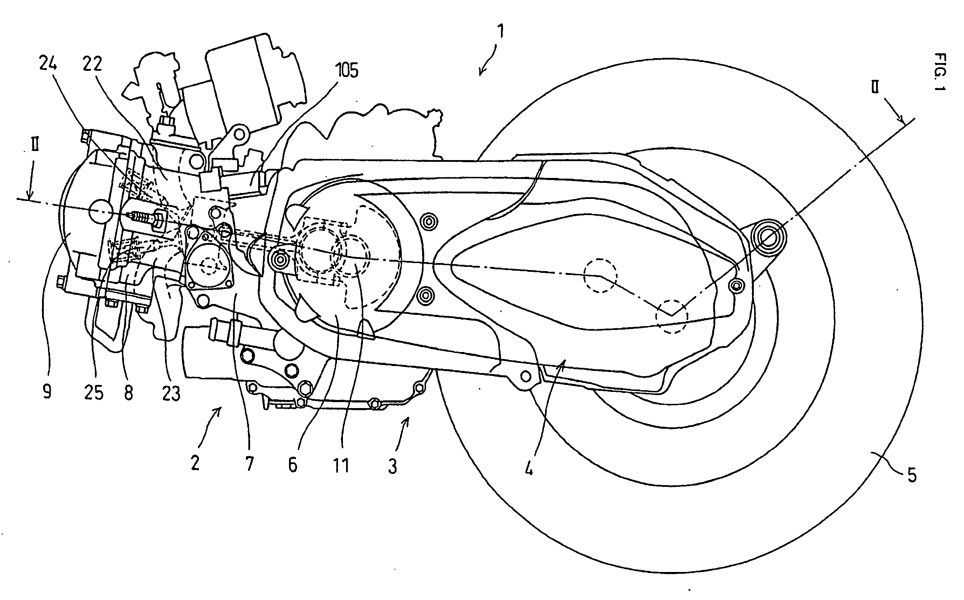

[0050] Fig. 1 is a side elevational view of a power unit 1 according to the invention.
Fig. 2 is a cross-sectional view taken along line 2-2 in Fig. 1.
Fig. 3 is an interior elevational view of a driving pulley 47 and its driving device.
Fig. 4 is an explanatory view of a mechanism of generation of a noise at a torque transmission key.
Fig. 5 is a cross-sectional view of a left half of a crankshaft 11.
Fig. 6 shows a position of a crankpin 14 in a cross-sectional view taken along line 6-6 in Fig. 5.
Fig. 7 is a radar chart representing a result of an experiment related to an attaching position of the torque transmitting key 70.
Fig. 8 is a radar chart representing a result of another experiment related to an attaching position of the torque transmitting key 70.
Fig. 9 is a perspective view of two kinds of torque transmitting keys used in the experiments.
Fig. 10 is a cross-sectional view showing a state where a movable half body 49 of the driving pulley is attached.
Fig. 11 shows a state where the movable half body 49 of the driving pulley is attached onto the crankshaft 11 as seen from an end face of the crankshaft axis, in a case where the torque transmitting key 70 is disposed at 180° from a crankpin direction P in a rotational direction W of the crankshaft.
Fig. 12 shows a state where the movable half body 49 of the driving pulley is attached onto the crankshaft 11 as seen from an end face of the crankshaft axis, in a case where the torque transmitting key 70 is disposed at 135° from a crankpin direction P in a rotational direction W of the crankshaft.

Fig. 1 is a side elevational view of a power unit 1 according to the present invention. This power unit is mounted on a rear portion of a motorcycle of scooter type such that the power unit is capable of vertical oscillation, and comprises an internal combustion engine 2 disposed on the front side of a rear wheel 5 as a drive wheel, a power transmission device 3, a rear-wheel supporting portion 4, and the rear wheel 5, which are integrally formed. The internal combustion engine is a water-cooled overhead-valve four-stroke single-cylinder engine.

The internal combustion engine 2 of the power unit 1 comprises a portion surrounded by a crankcase 6, a cylinder block 7, a cylinder head 8, and a cylinder head cover 9. A front end of the crankcase 6 is connected to the cylinder block 7 substantially horizontally oriented. A front end of the cylinder block 7 is connected to the cylinder head 8, whose front end is connected to the cylinder head cover 9.

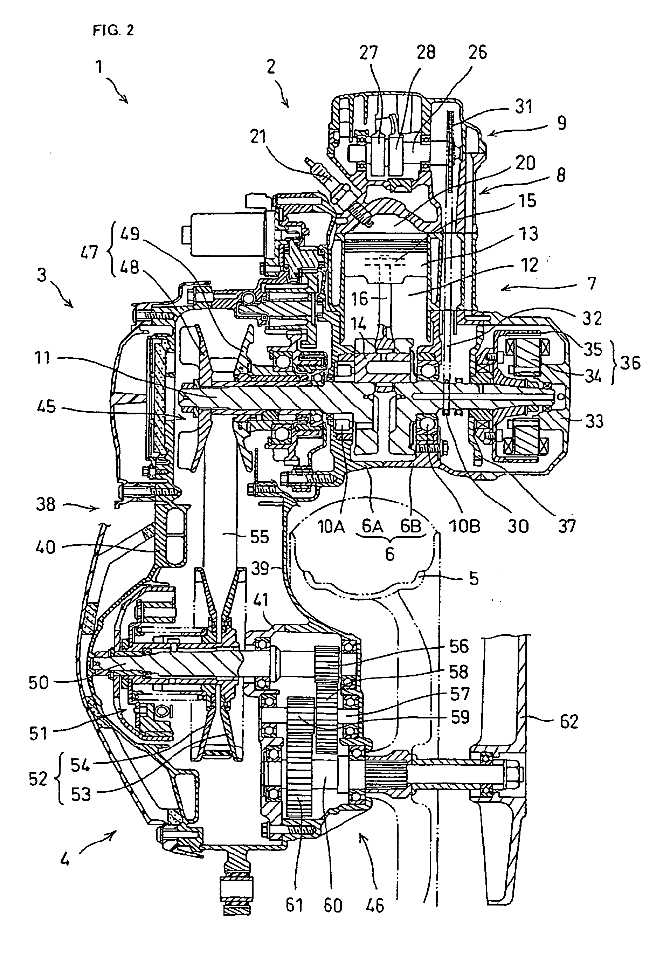

Fig. 2 is a cross-sectional view taken along line 2-2 in Fig. 1. The crankcase 6 comprises a left crankcase 6A and a right crankcase 6B. The left and right crankcases 6A, 6B respectively hold a roller bearing 10A and a ball bearing 10B, which support a crankshaft 11 such that the crankshaft 11 is rotatable. On the other hand, a piston 13 is slidably fitted in a cylinder bore 12 formed in the cylinder block 7. Two ends of a connecting rod 16 are respectively pivotably supported by the crankshaft 11 and the piston 13, via a crankpin 14 and a piston pin 15. With reciprocation of the piston 13, the crankshaft 11 rotates. On a bottom surface of the cylinder head 8, which is opposed to an end face of the piston 13, a combustion chamber 20 is formed. An ignition plug 21 is attached from the outside such that an end thereof faces the combustion chamber 20.

As shown in Fig. 1, an inlet port 22 in communication with the combustion chamber 20 is formed on the upper side of the cylinder head 8, while an exhaust port in communication with the combustion chamber 20 is formed on the lower side of the cylinder head 8. An intake valve 24 for opening/closing an opening of the inlet port 22 on the side of the combustion chamber, and an exhaust valve 25 for opening/closing an opening of the exhaust port 23 on the side of the combustion chamber 20 are slidably inserted in the cylinder head 8.

As shown in Fig. 2, a camshaft 26 is supported between the cylinder 8 and the cylinder head cover 9 and in parallel with the crankshaft 11. On the camshaft 26 are disposed an inlet cam 27 and an exhaust cam 28, which open/close the intake valve 24 and the exhaust valve 25, respectively. An endless chain 32 is wound around a drive sprocket 30 disposed on a right-hand portion of the crankshaft 11, and a driven sprocket 31 disposed at an end of the camshaft 26. By the endless chain 32, the camshaft 26 is driven or rotated by the crankshaft 11 at a number of revolutions half that of the crankshaft 11.

A right crankcase cover 33 is disposed on the outer side of the right crankcase 6B. Inside the right crankcase cover 33 is fixed a stator 34. A rotor 35 is fixed to the crankshaft 11 to surround the stator 34. The stator 34 and the rotor 35 constitute a generator 36. A driven gear 37 disposed adjacent the generator 36 is a gear for receiving a torque from a starter motor not shown.

The power transmission device 3 of the power unit 1 has a main body case 38, which comprises a right transmission case 39, a left transmission case 40 and a partition wall 41. The right transmission case 39 is formed integrally with the left crankcase 6A. The left transmission case 40 and the partition wall 41 are connected to the right transmission case 39. The main body case 38 of the power transmission device 3 serves as the rear-wheel supporting portion 4. The power transmission device 3 comprises a V-belt transmission 45 and a gear reducer 46. A front half of the V-belt transmission 45 is disposed between the left transmission case 40 and the right transmission case 39, and a rear half of the V-belt transmission 45 is disposed between the left transmission case 40 and the partition wall 41. The gear reducer 46 is disposed between the partition wall 41 and the right transmission case 39.

A drive shaft of the V-belt transmission 45 is the crankshaft 11, and a driving pulley 47 of the V-belt transmission 45 is disposed at a left end portion of the crankshaft 11. The driving pulley 47 comprises a stationary half body 48 and a movable half body 49. A driven shaft 50 of the V-belt transmission 45 is rotatably supported by the right transmission case 39 and the partition wall 41. A driven pulley 52 of the V-belt transmission 45 is disposed on the driven shaft 50 via a centrifugal clutch 51. The drive pulley 52 comprises a stationary half body 53 and a movable half body 54. An endless V-belt 55 is wound around the driving pulley 47 and the driven pulley 52, so that rotation of the driving pulley 47 is transmitted to the driven pulley 52. When a rotation speed of the driven pulley 52 exceeds a predetermined value, the centrifugal clutch 51 disposed between the driven pulley 52 and the driven shaft 50 is placed in its connecting state, thereby the driven shaft 50 starts rotating.

The gear reducer 46 comprises a group of gears mounted on three rotating shafts. A first one of the three rotating shafts is a right half of the driven shaft 50 of the V-belt transmission 45 which is supported by the right transmission case 39 and the partition wall 41, and a pinion 56 is formed on the first rotating shaft. A second one of the three rotating shafts is an intermediate shaft 57 which is rotatably supported by the right transmission case 39 and the partition wall 41, and a large-diameter gear 58 is integrally fitted on the second rotating shaft to mesh with the pinion 56 on the driven shaft 50. In addition, a pinion 59 is formed adjacent the large-diameter gear 58 and on the second rotating shaft. A third one of the three rotating shafts is a rear wheel axle 60 which is rotatably supported by the partition wall 41, the right transmission case 39 and an arm 62 connected to a main body of the internal combustion engine. A large-diameter gear 61 is fitted on the rear wheel axle 60 to mesh with the pinion 59 on the intermediate shaft 57. According to this arrangement, the torque of the driven shaft 50 is transmitted to the rear wheel axle 60 via the reduction gears with the speed reduced. The rear wheel 5 is integrally fixed to the rear wheel axle 60.

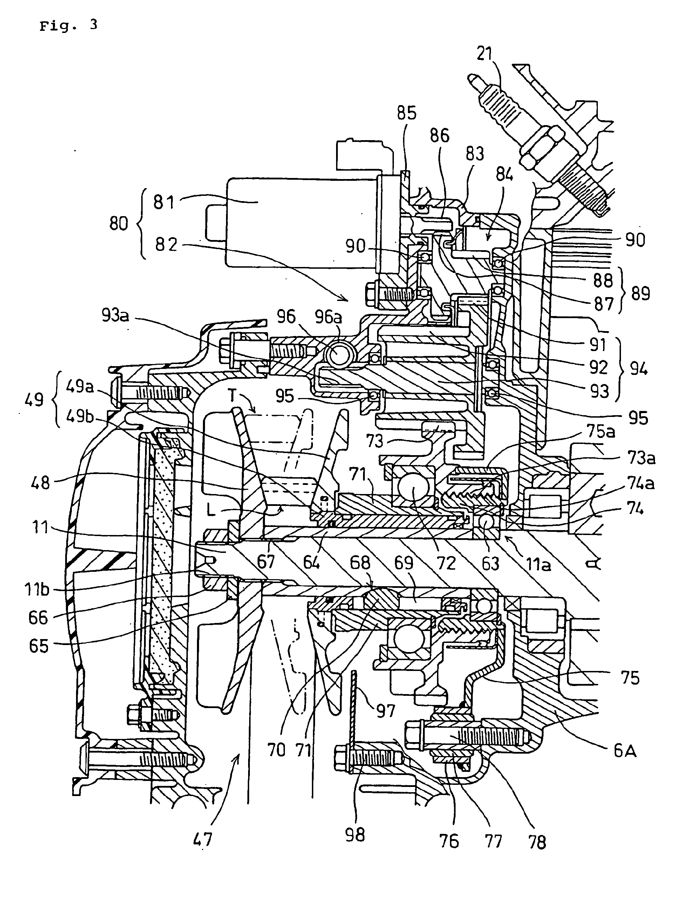

Fig. 3 is an interior elevational view of a driving pulley 47 and a driving device for driving the driving pulley 47. A left half of the crankshaft 11 which is sectioned by a step 11a from the other portion of the crankshaft 11 constitutes a small-diameter portion on which is mounted a ball bearing 63. Further, a cylindrical sleeve 64 and the stationary half body 48 of the driving pulley engage with a spline 67 at an end portion of the crankshaft to be thus mounted on the small-diameter portion of the crankshaft. A nut 66 is mounted on a threaded end 11b of the crankshaft 11 via a washer 65 and tightened. Accordingly, the cylindrical sleeve 64 and the stationary half body 48 of the driving pulley are fixed to the crankshaft 11 such that the cylindrical sleeve 64 and the stationary half body 48 are incapable of either rotating or axially moving, relative to the crankshaft 11. An arcuate keyway 68 is formed at a circumferential part of the sleeve 64.

The movable half body 49 of the driving pulley comprises a skirt-shaped flange portion 49a opposed to the stationary half body, and a cylindrical boss portion 49b surrounding the sleeve 64. At a circumferential part of the boss portion 49b of the movable half body 49 of the driving pulley, a guide groove 69 is formed through the boss portion 49b in a radial direction of the boss portion 49b to extend in the axial direction. A torque transmitting key 70 is fitted to engage the guide groove 69 and the keyway 68 of the sleeve 64. Thus, the movable half body 49 of the driving pulley is mounted on the sleeve 64 such that the movable half body 49 is incapable of rotating but capable of axially moving, relative to the sleeve 64, that is, relative to the crankshaft 11.

A cylindrical supporting tube 71 is mounted on an outer circumferential surface of the boss portion 49b of the movable half body 49 of the driving pulley such that the supporting tube 71 is capable of relative rotation but incapable of axial movement relative to the boss portion 49b, so that the supporting tube 72 covers an external opening of the guide groove 69 in the boss portion 49b of the movable half body.

An inner ring of a ball bearing 72 is mounted on an outer circumferential surface of the supporting tube 71 such that the inner ring is incapable of relative axial movement, while an outer ring of the ball bearing 72 is held by and inside one of two end portions of a sliding gear 73 such that the outer ring is incapable of relative axial movement. The sliding gear 73 is connected to the supporting tube 71 via the ball bearing 72 such that the sliding gear 73 is capable of rotating relative to the supporting tube 71, and accordingly relative to the movable half body 49 of the driving pulley, but incapable of relative axial movement. That is, the sliding gear 73 and the movable half body 49 move integrally in the direction of the crankshaft, but independently in the rotating direction.

An outer ring of the ball bearing 63 mounted on the crankshaft is held by an inner circumferential surface of a cylindrical threaded shaft 74 coaxially surrounding the crank shaft 11, with relative axial movement thereof inhibited. A threaded portion 73a of an inner circumferential surface at the other end portion of the sliding gear 73 engages with a threaded portion 74a of an outer circumferential surface of the threaded shaft 74. To the threaded shaft 74 is fixed a threaded-shaft fixing plate 75. At one of two ends of the threaded-shaft fixing plate 75, there is disposed a cylindrical attaching tube 76, which is secured to the left crankcase 6A with a bolt 78 via a rubber vibration isolator 77, thereby positioning the cylindrical threaded shaft 74 with respect to the left crankcase 6A such that the threaded shaft 74 is incapable of rotating and relative movement in the direction of the crankshaft. The supporting tube 71, the ball bearing 72, the sliding gear 73, the threaded shaft 74, and the threaded-shaft fixing plate 75 constitute a slider mechanism for driving the movable half body of the driving pulley in the axial direction.

The sliding gear 73 is rotated or driven by an actuator 80, which comprises an electric motor 81 and a gear reducer 82. The electric motor 81 is adapted to be automatically controlled in accordance with the velocity of the motorcycle, the throttle angle, and the engine speed. A reduction gear case 83 is attached to the left crankcase 6A to form a reduction gear chamber 84. The electric motor 81 is attached to the reduction gear case 83 via an attachment plate 85, with a pinion 86, which is formed on a rotating shaft of the motor, extending into the reduction gear chamber 84.

A first intermediate gear 89, which is integrally formed with a large-diameter gear 87 meshing with the pinion 86, and a pinion 88 adjacent the large-diameter gear 87, is rotatably supported by the left crankcase 6A and the reduction gear case 83 via a ball bearing 90.

A second intermediate gear 94 comprises a large-diameter gear 91 meshing with the pinion 88, and a pinion 92 integral with and adjacent to the large-diameter gear 91. The large-diameter gear 91 and the pinion 92 are integrally fitted on a rotating shaft 93. The second intermediate gear 94 is rotatably supported by the left crankcase 6A and the reduction gear case 83, via the ball bearing 95. The pinion 92 is a gear having a large axial dimension, and engages with the sliding gear 73 at a position in the axial direction of the sliding gear 73.

A gear 93a is formed at an end portion of the rotating shaft 93 of the second intermediate gear 94, so as to engage with a worm 96a formed around a stroke sensor shaft 96 rotatably disposed on the reduction gear case 83. The stroke sensor 105 (Fig. 1) detects a stroke of the movable half body 49 of the driving pulley.

The threaded shaft is secured to the left crankcase with the bolt 78. When the electric motor is not operated yet, the sliding gear 73 is at a standstill. When the internal combustion engine is operated, the stationary half body 48 and movable half body 49 of the driving pulley, the sleeve 64, the torque transmitting key 70, and the supporting tube 71 rotate with the crankshaft 11, but the threaded shaft 74 and the sliding gear 73 are not affected by the rotation of the crankshaft 11 in the presence of the ball bearings 63, 72 interposed therebetween.

When the electric motor 81 is rotated in the forward direction in accordance with such a control instruction, the power is transmitted to the sliding gear 73 via the first and second intermediate gears 89, 94, to rotate the sliding gear 73. Accordingly, by the rotation of the threaded portion 73a of the sliding gear 73 engaging with the threaded portion 74a of the threaded shaft 74, the sliding gear 73 moves along the axial direction of the crankshaft 11, pushing the movable half body 49 of the driving pulley via the ball bearing 72 and the supporting tube 71 to reduce the distance of the movable half body from the stationary half body of the driving pulley, so that the V-belt is shifted toward its top position T. When the electric motor 81 is rotated in the reverse direction in accordance with such a control instruction, the distance between the movable and stationary half bodies of the driving pulley is increased by a process reverse to the above-described process, making the V-belt to shift toward its low position L. A low-side stopper 75a for the sliding gear 73 is disposed at the other end of the threaded-shaft fixing plate 75, and a top-side stopper 97 for the sliding gear 73 is fixed to the left crankcase 6A with a bolt 98.

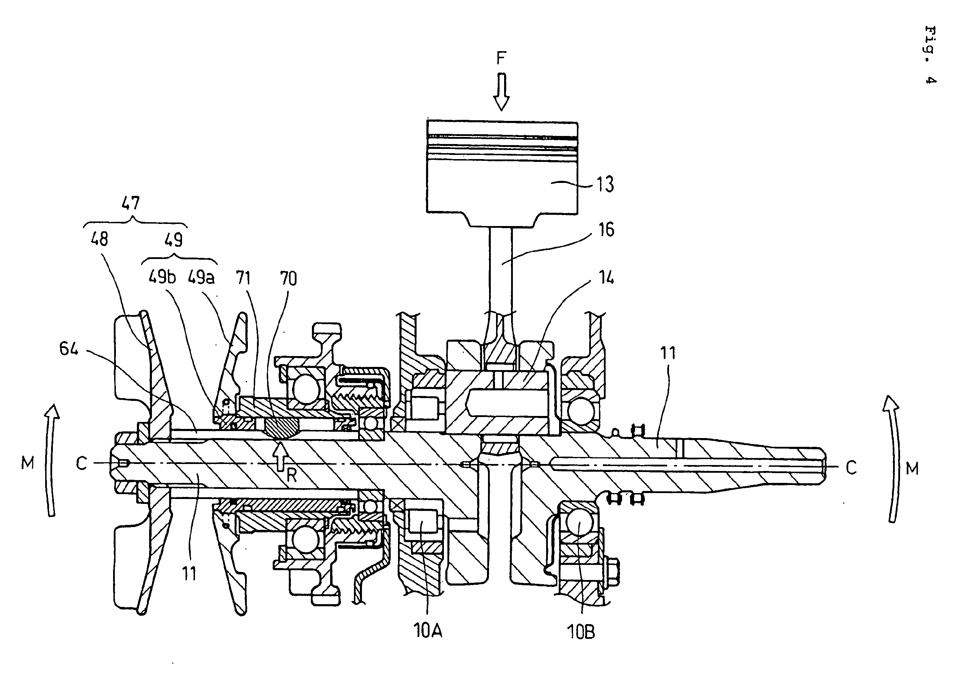

Fig. 4 is an illustration of a mechanism of noise generation related to the torque transmission key. This figure shows a state where the piston 13 is at the top dead center. When the piston 13 is at the top dead center, a large force F caused by an abrupt pressure rise in the combustion chamber due to combustion of fuel is imposed on a top face of the piston 13. This force acts to push downward a central portion of the crankshaft 11 via the connecting rod 16 and the crankpin 14. The central portion of the crankshaft 11 is thus very slightly deflected or deformed. Accordingly, at two opposite ends of the crankshaft is generated an upward bending moment M with the bearings 10A, 10B being a supporting point, and thus the two opposite ends of the crankshaft are slightly displaced upward. When only one torque transmitting key 70 is provided to the movable half body 49 of the driving pulley, and disposed on the same side of an axis C-C of the crankshaft as the crankpin 14, the torque transmitting key 70 is thrust upward and radially outwardly of the crankshaft, by a reaction force R due to the displacement of the crankshaft 11 caused by the upward bending moment and transmitted from a bottom surface of the keyway 68 of the sleeve 64. Since there is a certain clearance between an inner surface of the supporting tube 71 and an outer surface of the transmitting key 70 so as to allow the sliding movement of the supporting tube 71 and the movable half body 49 in the axial direction of the crankshaft, the torque transmitting key 70 thrust upward by the reaction force R is brought into abutting contact with the inner surface of the supporting tube 71 to generate a hitting sound. Hence, when the torque transmitting key 70 is disposed on the side not to receive the reaction force R, that is, a side of the crankshaft axis C-C which is opposite to the crankpin 14, generation of the hitting sound is reduced.

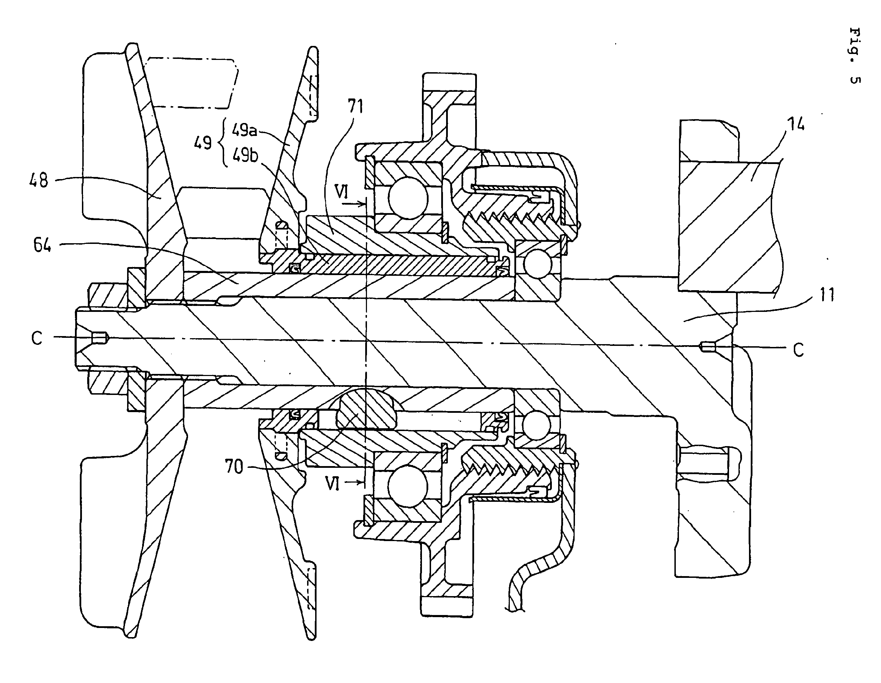

Fig. 5 is a cross-sectional view of the left half of the crankshaft 11 according to the present embodiment. In this figure are shown the stationary half body 48 of the driving pulley an entirety of which is made of aluminum alloy, and the movable half body 49 of the driving pulley whose skirt-shaped flange portion 49a is made of aluminum alloy and whose central boss portion 49b is made of steel. The movable half body 49 is formed such that the flange portion 49a thereof is integrally formed, by forging, at an end of the boss portion 49b prepared in advance. The sleeve 64, the torque transmitting key 70, and the supporting tube 71 are made of steel. In this embodiment, the crankpin 14 and the torque transmitting key 70 are respectively disposed on the opposite sides of the axis C-C of the crankshaft 11, providing one example of an arrangement to achieve the above-described object of the invention, i.e., to reduce the noise generation.

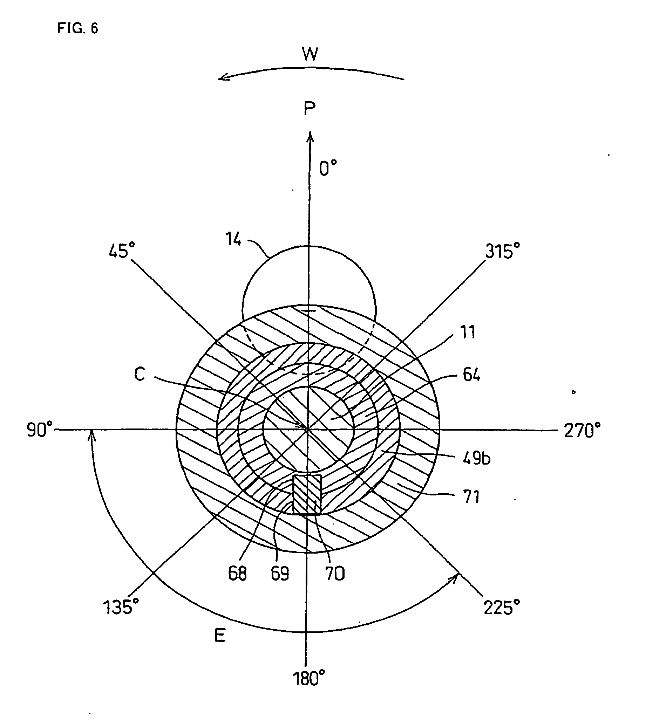

Fig. 6 is a view showing the position of the crankpin 14 in a cross-sectional view taken along line 6-6 in Fig. 5. In Fig. 6, arrow P indicates a direction from the crankshaft axis C to the crankpin 14. Radial lines extending from the crankshaft axis C represent respective angles around the crankshaft axis C as measured from the crankpin direction P as 0° in a rotational direction W of the crankshaft. The keyway 68, the guide groove 69, and the torque transmitting key 70 in the above-described embodiment are disposed at a position of 180° with respect to the crankshaft axis C. That is, the boss portion 49b of the movable half body of the driving pulley, the sleeve 64, the supporting tube 71, and the torque transmitting key 70 are mounted or attached such that the torque transmitting key 70 is on a side of the axis C of the crankshaft 11 which is opposite to the crankpin 14.

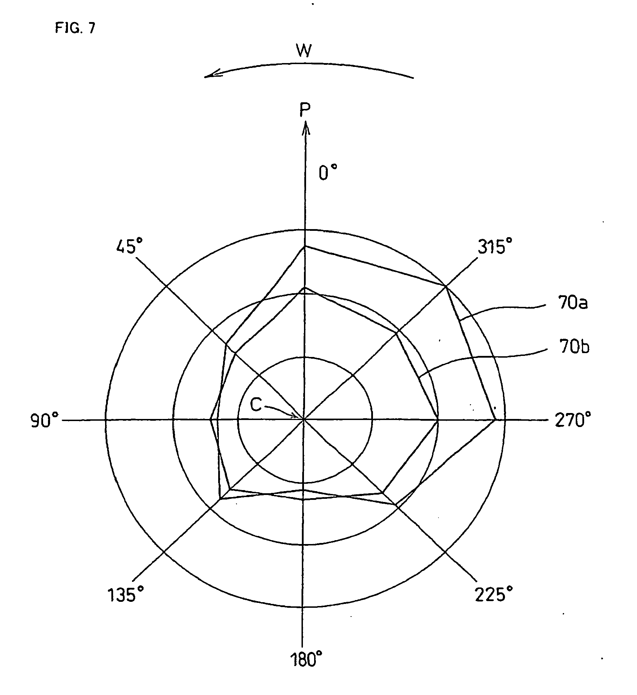

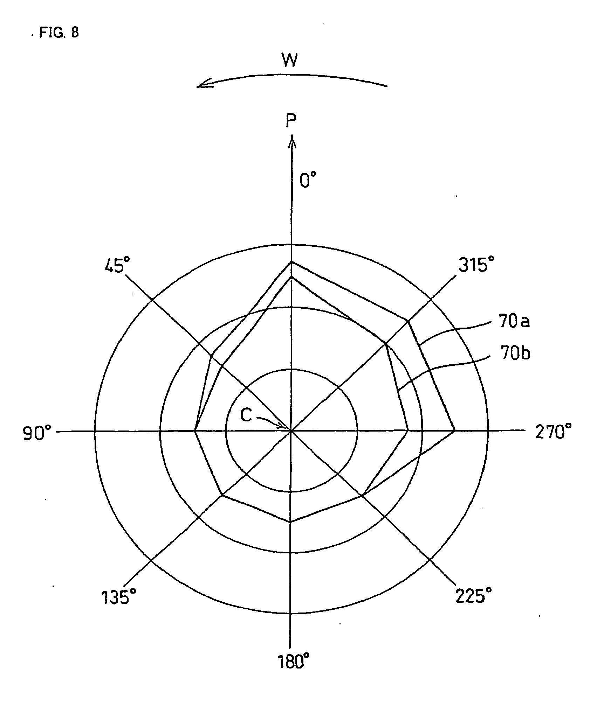

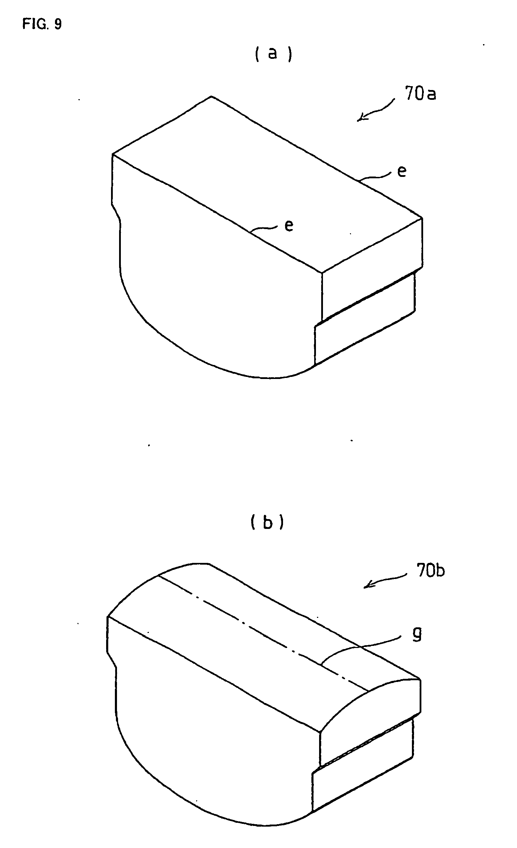

Figs. 7 and 8 are radar charts representing results of an experiment related to the attaching position of the torque transmission key 70 around the crankshaft. The arrow P indicates the direction of the crankpin 14 with respect to the crankshaft axis C, and radial lines extending from the crankshaft axis C represent respective angles as measured from the crankpin direction P as 0° in the rotational direction W of the crankshaft. Fig. 7 shows measured values of the pitch of the hitting sound, i.e., the near field sound pressure (dB), for each attaching position of the key around the crankshaft axis. The farther from the center C the graph line representing the measured result, the higher the pitch of the hitting sound; and the nearer to the center C the graph line, the lower the pitch of the hitting sound. Fig. 8 shows a result of evaluation of the tone of the hitting sound, by the acoustic sense of an observer, for each attaching position of the torque transmitting key around the crankshaft axis. The farther from the center C the graph line representing the measured result, the more uncomfortable the hitting sound; and the nearer to the center C the graph line, the less uncomfortable the hitting sound. In each of Figs. 7 and 8, two graph lines represent results for respective kinds 70a, 70b of the key 70 as shown in Fig. 9.

Fig. 9 is a perspective view of the two kinds of the torque transmitting key 70 as used in the above experiment. Fig. 9(a) shows a flat key 70a whose top face to be in contact with the inner surface of the supporting tube 71 is plane, and Fig. 9(b) shows a round key 70b whose top face is a curved surface having a generatrix parallel to the direction of the crankshaft axis. The flat key 70a contacts the inner surface of the supporting tube 71 at two edges e, e. The round key 70b contacts the inner surface of the supporting tube 71 at a single generatrix g.

As seen in Figs. 7 and 8, the noise is loud when the attaching position of the torque transmitting key 70 is about 315° or -45°. It is assumed that the noise becomes loud where the attaching position of the torque transmitting key is at about -45° since the inner pressure of the combustion chamber becomes maximum after the piston has reached the top dead center and when the crankshaft has slightly rotated from the position corresponding to the top dead center.

Fig. 6 shows an example where the torque transmitting key 70 is at 180° from the crankpin direction P with respect to the crankshaft axis C, as measured in the rotational direction W of the crankshaft. However, it is apparent from Figs. 7-9 that when the attaching position of the torque transmitting key 70 is within a range from 90° to 225° from the crankpin direction P with the crankshaft axis C being the center, as measured in the rotational direction W of the crankshaft, i.e., a range E as shown, the noise is reduced in comparison with a case where the attaching position is outside this range. It is also apparent that the noise is lower when the round key 70b is used than when the flat key 70a is used.

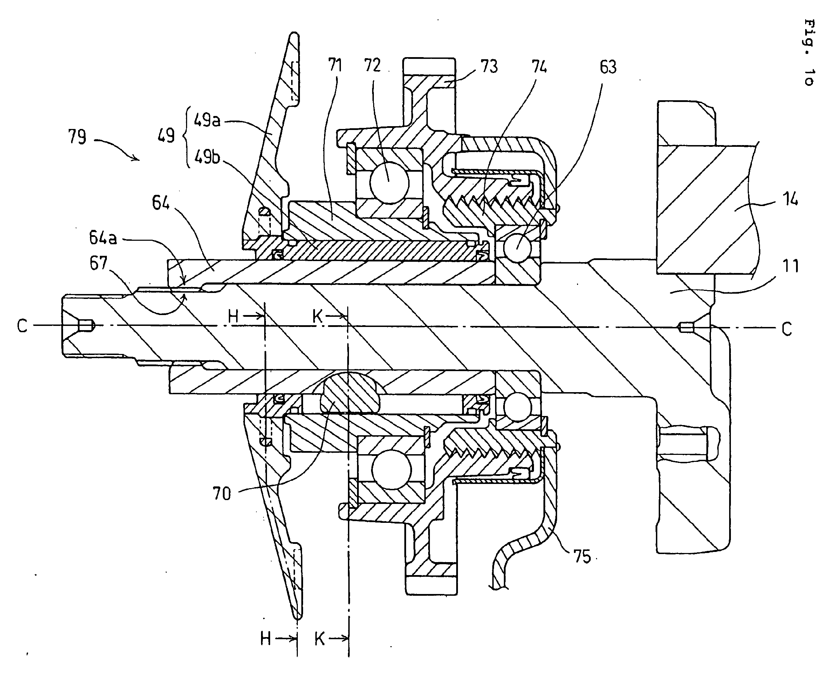

Fig. 10 is an illustration of a procedure of attaching the movable half body 49 of the driving pulley and others to the crankshaft 11. Upon attaching the movable half body 49 of the driving pulley and others to the crankshaft 11, all the parts shown in Fig. 10 except the crankshaft 11 and the crankpin 14 are integrally assembled into a movable-half-body assembly 79 before mounted on the crankshaft 11, and then the assembly 79 is fitted on the crankshaft 11 by inserting the crankshaft 11 into the assembly 79 from an end of the assembly 79. The parts integrally assembled into the movable-half-body assembly 79 includes the sleeve 64, the movable half body 49, the torque transmitting key 70, the supporting tube 71, the ball bearing 72, the sliding gear 73, the threaded shaft 74, the threaded shaft fixing plate 75, the ball bearing 63, rings for retaining the ball bearings, and a sealing member. The angular position of the torque transmitting key 70 with respect to the crankpin 14 when the assembly 79 is mounted on the crankshaft 11 is determined depending on the circumferential position at which the spline 67 of the crankshaft 11 and a spline 64a at an end of the sleeve 64 mesh with each other. When the assembly is attached onto the crankshaft 11, the torque transmitting key 70 should be placed at a desired circumferential position.

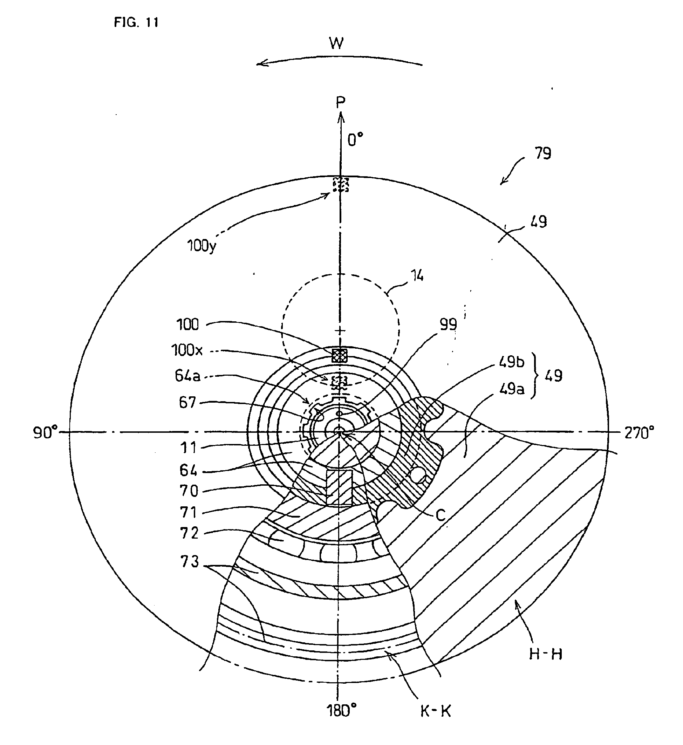

Fig. 11 illustrates a procedure of attaching the movable-half-body assembly 79 onto the crankshaft 11, and shows a state after the assembly 79 is attached as seen from an axial end face of the crankshaft 11. In this figure are shown cross sectional views taken along lines H-H and K-K in Fig. 10. This figure illustrates an example of the attaching procedure where the torque transmitting key 70 is placed at 180° as measured from the crankpin direction P. In the end face of the crankshaft 11, a punch mark 99 is put on the side of the crankpin 14 with respect to the crankshaft axis C. On the other hand, an indelible ink mark 100 is put on a front face of the movable half body 49 on a side of the crankshaft axis C which is opposite to the torque transmitting key 70. When the movable-half-body assembly 79 is attached onto the crankshaft 11, the punch mark 99, the indelible ink mark 100, and the crankshaft axis C are on a same line, in order to position the torque transmitting key 70 on the side of the crankshaft axis C opposite to the crankpin 14. The indelible ink is ink which takes a long time to fade, and may be replaced by lacquer, paint, or the like.

In the above-described embodiment, the indelible ink mark 100 is put near the center of the movable half body, by way of example only. This mark may be put anywhere on a part of the line on the side of the crankshaft axis C which is opposite to the torque transmitting key 70, in the front face of the movable-half-body assembly 79. For instance, the mark 100 may be a mark 100x put on an end face of the sleeve 64, or a mark 100y put on a peripheral portion of the flange portion of the movable half body.

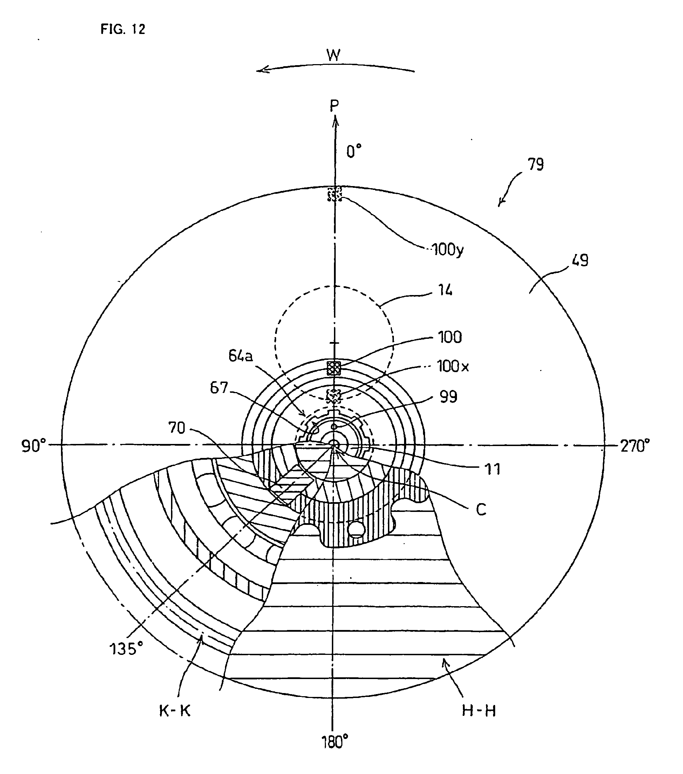

Fig. 12 is an illustration of another example of a procedure of attaching the movable-half-body assembly 79 onto the crankshaft 11, and shows a state after the assembly 79 is attached as seen from an axial end face of the crankshaft 11. In this example, the torque transmitting key 70 is disposed at 135° from the crankpin direction P in the rotational direction W of the crankshaft. The punch mark 99 is put on the end face of the crankshaft 11 on the line of the crankpin direction P. In this example, the indelible ink mark 100, 100x, 100y or a like mark is put at 135° from the torque transmitting key 70 in the direction reverse to the rotational direction W of the crankshaft. When attaching the movable-half-body assembly 79 onto the crankshaft 11, the punch mark 99, the indelible ink mark 100 or the like mark, and the crankshaft axis C should be on a same line, in order to position the torque transmitting key 70 at the desired circumferential position, i.e., at 135°.

In general, where the punch mark 99 is on the line of the crankpin direction P, to position the torque transmitting key 70 at θ° from the crankpin direction P in the rotational direction W of the crankshaft, the indelible ink mark 100 should be put at θ° from the position of the torque transmitting key 70 in the direction reverse to the rotational direction W of the crankshaft. When attaching the movable-half-body assembly 79 onto the crankshaft 11, the splines 67, 64a are engaged with each other, with the punch mark 99 and the indelible ink mark 100 aligned.

Where the indelible ink mark 100y is put at the peripheral portion of the movable half body 49, both the indelible ink mark 100y and the crankpin 14 are viewable in a single sight, and thus it may be arranged such that the splines 67, 64a are engaged with each other, without the punch mark 99 and while the indelible ink mark 100y and the crankpin 14 directly are aligned.

In the above-described embodiment, the torque transmitting key is semicircular, by way of example only. The present invention is applicable to a key having other shapes. Further, the invention is applicable to a case where a pin is employed for transmitting the torque.

As described above, the invention gives the following effects:
(1) By positioning the torque transmitting key 70 within the range (i.e., the range E shown in Fig. 6) from 90° to 225° around the crankshaft axis C from the crankpin direction P in the rotational direction W of the crankshaft, the noise generated between the torque transmitting key 70 and the supporting tube 71 due to the deflection and the whirling motion of the crankshaft is reduced.
(2) Since only a single guide member is provided for the slider mechanism, in the circumferential direction of the crankshaft, the clearance in the circumferential direction, which is required for accommodating the relative error where a plurality of keys are provided, is omitted, thereby reducing the rattling in the circumferential direction. Thus, in addition to the reduction in the noise due to the radial contact, the noise due to the circumferential contact is reduced.
(3) When the torque transmitting key whose surface contacting the supporting tube is the curved surface is used, the portion contacting the supporting tube consists of a single generatrix. Thus, the noise is further reduced.
(4) Since the noise is reduced while the size of the crankshaft portion is kept relatively small, the slider mechanism can be disposed around the crankshaft. This enables to downsize the V-belt type automatic transmission.
(5) The employment of the punch mark and the indelible ink mark enables to position the torque transmitting key at a nominal, proper position without failure, when the movable half body of the driving pulley is assembled on site.

### [Description of Reference Numerals]

- 45: V-belt transmission
- 47: driving pulley
- 48: stationary half body of the driving pulley
- 49: movable half body of the driving pulley
- 49a: flange portion
- 49b: boss portion
- 64: sleeve
- 64a: spline at an end of the sleeve
- 67: spline
- 68: keyway
- 69: guide groove
- 70: torque transmitting key
- 70a: flat key
- 70b: round key
- 71: supporting tube
- 73: sliding gear
- 74: threaded shaft
- 75: threaded-shaft fixing plate
- 79: movable-half-body assembly
- 80: actuator
- 81: electric motor
- 82: gear reducer
- 99: punch mark
- 100: indelible ink mark

## Claims

1. A V-belt type automatic transmission (45) including a crankshaft (11), a cylindrical sleeve (64), which is fixed on the crankshaft (11), a crankpin (14) and a driving pulley (47), said driving pulley (47) comprising a stationary half body (48) fixed on the crankshaft (11) and a movable half body (49) opposed to the stationary half body (48) and disposed to be slidable on the crankshaft (11) in a direction of the axis of the crankshaft, wherein
the movable half body (49) comprises a skirt-shaped flange portion (49a) for holding a V-belt, and a cylindrical boss portion (49b) having a guide groove (69) to which is transmitted a driving torque from the crankshaft (11), and
a single key (70) for transmitting the driving torque of the crankshaft to the movable half body (49) is fitted between the guide groove (69) and a keyway (68) formed in the cylindrical sleeve (64),
the V-belt type automatic transmission (45) being
**characterized in that**:
the torque transmitting key (70) is disposed in a circumferential direction of the crankshaft (11) on a side of the axis of the crankshaft (11) which is opposite to the side of the crankpin (14).

2. The V-belt type automatic transmission (45) according to claim 1,
**characterized in that**
the torque transmitting key (70) is disposed within an angular range from 90° to 225° around the axis of the crankshaft where a direction toward a crankpin being 0°.

3. The V-belt type automatic transmission (45) according to any of the preceding claims,
**characterized in that**
a surface of the torque transmitting key (70) remote from the axis of the crankshaft comprises a curved surface having a generatrix parallel to the axis of the crankshaft.

4. The V-belt type automatic transmission (45) according to any of the preceding claims,
**characterized in that**
the movable half body (49) of the driving pulley (47) is driven by an actuator (80) via a slider mechanism, along the axis of the crankshaft.

## Patentansprüche

1. Automatisches Getriebe vom Keilriementyp (45), welches eine Kurbelwelle (11), eine zylindrische Hülse (64), welche an der Kurbelwelle (11) fixiert ist, einen Kurbelzapfen (14) und eine Antriebsscheibe (47) enthält, wobei die Antriebsscheibe (47) einen stationären Halbkörper (48), welcher auf der Kurbelwelle (11) fixiert ist, und einen bewegbaren Halbkörper (49) umfasst, welcher gegenüberliegend des stationären Halbkörpers (48) ist und angeordnet ist, um auf der Kurbelwelle (11) in einer Richtung der Achse der Kurbelwelle verschiebbar zu sein, wobei
der bewegbare Halbkörper (49) einen schürzenförmigen Flanschabschnitt (49a) zum Halten eines Keilriemens, und einen zylindrischen Nabenabschnitt (49b) umfasst, welcher eine Führungsnut (69) aufweist, auf welche ein Antriebsmoment von der Kurbelwelle (11) übertragen wird, und
wobei ein einzelner Keil (70) zum Übertragen des Antriebsmoments der Kurbelwelle auf den bewegbaren Halbkörper (69) zwischen der Führungsnut (69) und einer Keilnut (68) eingefügt ist, welche in der zylindrischen Hülse (64) gebildet sind,
wobei das automatische Getriebe des Keilriementyps (45) **dadurch gekennzeichnet ist, dass**
der das Moment übertragende Keil (70) in einer Umfangsrichtung der Kurbelwelle (11) auf einer Seite der Achse der Kurbelwelle (11) angeordnet ist, welche gegenüberliegend der Seite des Kurbelzapfens (14) ist.

2. Automatisches Getriebe vom Keilriementyp (45) gemäß Anspruch 1,
**dadurch gekennzeichnet, dass**
der das Moment übertragende Keil (70) innerhalb eines Winkelbereichs von 90° bis 225° um die Achse der Kurbelwelle herum angeordnet ist, wo eine Richtung in Richtung des Kurbelzapfens 0° ist.

3. Automatisches Getriebe vom Keilriementyp (45) gemäß irgendeinem der vorherigen Ansprüche,
**dadurch gekennzeichnet, dass**
eine Oberfläche des das Moment übertragenden Keils (70), welche entfernt von der Achse der Kurbelwelle ist, eine gekrümmte Oberfläche aufweist, welche eine Generatrix aufweist, die parallel zu der Achse der Kurbelwelle ist.

4. Automatisches Getriebe vom Keilriementyp (45) gemäß irgendeinem der vorherigen Ansprüche,
**dadurch gekennzeichnet, dass**
der bewegbare Halbkörper (49) der Antriebsscheibe (47) durch einen Aktuator (80) über einen Gleitermechanismus entlang der Achse der Kurbelwelle angetrieben wird.

## Revendications

1. Transition automatique de type à courroie en V (45) comprenant un vilebrequin (11), un manchon cylindrique (64), qui est fixé sur le vilebrequin (11), un maneton (14) et une poulie d'entraînement (47), ladite poulie d'entraînement (47) comprenant un demi-corps fixe (48) fixé sur le vilebrequin (11) et un demi-corps mobile (49) opposé au demi-corps fixe (48) et disposé pour coulisser sur le vilebrequin (11) dans une direction de l'axe du vilebrequin, dans laquelle :
le demi-corps mobile (49) comprend une partie de rebord en forme de jupe (49a) pour maintenir une courroie en V, et une partie de bosse cylindrique (49b) ayant une rainure de guidage (69) à laquelle est transmis un couple d'entraînement du vilebrequin (11), et
une clavette unique (70) pour transmettre le couple de transmission du vilebrequin au demi-corps mobile (49) est montée entre la rainure de guidage (69) et une rainure de clavette (68) formé dans le manchon cylindrique (64),
la transmission automatique de type à courroie V (45) étant **caractérisée en ce que** :
la clavette de transmission de couple (70) est disposée dans une direction circonférentielle du vilebrequin (11) sur un côté de l'axe du vilebrequin (11) qui est opposé au côté du maneton (14).

2. Transmission automatique de type à courroie en V (45) selon la revendication 1, **caractérisée en ce que** la clavette de transmission de couple (70) est disposée dans une plage angulaire allant de 90° à 225° autour de l'axe du vilebrequin où une direction vers le maneton est de 0°.

3. Transmission automatique de type à courroie en V (45) selon l'une quelconque des revendications précédentes, **caractérisée en ce que**:
une surface de la clavette de transmission de couple (70) à distance de l'axe du vilebrequin comprend une surface incurvée ayant une génératrice parallèle à l'axe du vilebrequin.

4. Transmission automatique de type à courroie en V (45) selon l'une quelconque des revendications précédentes, **caractérisée en ce que** :
le demi-corps mobile (49) de la poulie d'entraînement (47) est entraîné par un actionneur (80) via un mécanisme de glissière, le long de l'axe du vilebrequin.
